# EUROPÄISCHE PATENTSCHRIFT

(11) **EP 2 738 955 B1**
(45) Veröffentlichungstag und Bekanntmachung des Hinweises auf die Patenterteilung: **11.01.2017**
(21) Anmeldenummer: 12194613.1
(22) Anmeldetag: 28.11.2012
(51) Int. Cl.: H04B 10/071, G01M 11/00, H04B 10/077

(54) **Datennetz**
Data network
Réseau de données

(43) Veröffentlichungstag der Anmeldung: 04.06.2014
(73) Patentinhaber: Deutsche Telekom AG, 53113 Bonn (DE)
(72) Erfinder: Bunge, Christian-Alexander, 12157 Berlin (DE); Jamshidi, Kambiz, 04277 Leipzig (DE)
(74) Vertreter: Braun-Dullaeus, Karl-Ulrich

(56) Entgegenhaltungen:
- WO-A1-97/05713
- US-A- 5 671 308
- SWOOK HANN ET AL: "Monitoring technique for a hybrid PS/WDM-PON by using a tunable OTDR and FBGs; Monitoring technique for a hybrid PS/WDM-PON", MEASUREMENT SCIENCE AND TECHNOLOGY, IOP, BRISTOL, GB, Bd. 17, Nr. 5, 1. Mai 2006 (2006-05-01), Seiten 1070-1074, XP020103495, ISSN: 0957-0233, DOI: 10.1088/0957-0233/17/5/S22

## Beschreibung

Die Erfindung betrifft ein optisches Datennetz und ein Verfahren zum Überwachen eines optischen Datennetzes. Insbesondere ist die Erfindung anwendbar auf optische Zugangsnetze. Die Erfindung ist ferner anwendbar auf sternförmige optische Netze, in welchen eine zentrale Datenverteilungsstelle optische Signale an eine Vielzahl von Datenempfängern sendet. Dabei können Leistungssplitter als zentrale Verteilungspunkte verwendet werden.

Viele optische Datennetze, insbesondere optische Zugangsdatennetze, stützen sich auf eine Punkt-zu-Multipunkt-Struktur, in der ein zentraler Knoten, insbesondere eine Datenverteilungsstelle, verbunden ist mit einer großen Anzahl von Endpunkten (Datenempfänger). Das Datennetz kann einen großen geografischen Bereich abdecken. Bei solchen Netzen ist es allein schon wegen der vielen betroffenen Nutzer erforderlich, dass Verbindungsschwierigkeiten so schnell wie möglich erkannt werden. Eine kontinuierliche Überwachung des Datennetzes ist daher erforderlich. Insbesondere eine zentralisierte Überwachung, im Wesentlichen ausgehend von einen zentralen Punkt, hat sich als wirtschaftlich interessant herausgestellt. Die Schwierigkeit liegt aber darin, dass der zentrale Punkt stets mit allen Endpunkten verbunden ist und somit eine gezielte Überprüfung einzelner Anschlüsse mit herkömmlichen Methoden schwer möglich ist.

Die sogenannte Fibre-To-The-Home (FTTH, "Faser bis ins Heim") Technik stellt bislang die größte erreichbare Datenübertragungsrate zur Verfügung, verglichen mit anderen verfügbaren Lösungen für die Zugangsdatennetze. Der Grund liegt darin, dass optische Leitungen bis zum Zugangspunkt (z.B. bis zum Nutzer nach Hause) verwendet werden, die eine sehr geringe Dämpfungsrate aufweisen und sehr hohe Datenübertragungsraten unterstützen. Die Architektur, die für die für Datennetze basierend auf dieser Technologie verwendet werden, ist üblicherweise das passive optische Netz (PON). Dabei wird insbesondere die Sterntopologie verwendet, in der eine zentrale Datenverteilungsstelle (Optic Line Terminal, OLT) mit einem Leistungssplitter verbunden ist, von dem aus eine Vielzahl von Leitungen mit den Datenempfängern (Optical Network Unit, ONU) verbunden sind. Die Datenverteilungsstelle sendet Datennutzsignale an alle ONUs, so dass ausgehend von der Datenverteilungsstelle keine separate Leitung für jeden einzelnen Empfänger vorgehalten werden muss. Das Aufsplitten der einzelnen Leitungen erfolgt dann gegebenenfalls erst an einem Leistungsteiler vor den einzelnen Datenempfängern, so dass der Gesamtbedarf an Glasfaserleitungen bzw. die Länge der Glasfaserleitungen und die Zahl der Ports reduziert sein kann.

Derzeitige passive optische Netze können in etwa 128 Nutzer bis zu einer Distanz von etwa 20 km erreichen. Die Bestrebungen gehen aber dahin, dass die Anzahl der Nutzer auf bis zu 1024 oder mehr ansteigen soll und die Distanz dann 100 km erreichen soll. Eine besondere Aufmerksamkeit kommt dabei der Überwachung der Datenverbindung zu, also ob eine Verbindung von dem OLT zu den einzelnen ONUs störungsfrei vorhanden ist oder nicht.

Als grundsätzlich geeignete Möglichkeit zur Überwachung hat sich das Codemultiplexing als flexibel und relativ einfach durchführbar herausgestellt. Dabei verfügen z.B. alle Nutzer oder Endpunkte über passive Kodierer, die einen zentral ausgesendetes Testsignal reflektieren und dabei individuell kodieren können. Das individuelle reflektierte Signal kann dann durch Korrelation wiedererkannt werden. Dabei werden optische Testsignale zentral ausgesendet und an alle Endpunkte des Datennetzes versendet. Es erfolgt dann eine Kodierung an den Enden sämtlicher Netzzweige, wobei die Testsignalen durch spezielle Reflektoreneinheiten reflektiert werden, die mehrere Reflektoren umfassen. Die einzelnen Reflektoren einer Reflektoreinheit sind mit unterschiedlichen Abständen zum zentralen Punkt angeordnet. Die Testsignale werden von allen Reflektoren zurückgeworfen und als reflektierte Testsignale wieder in Richtung des zentralen Punkten versendet. Dadurch, dass die Reflektoren aber unterschiedliche Abstände zum zentralen Punkt aufweisen, ergeben sich für die an den verschiedenen Reflektoren reflektierten Testsignale jeweils unterschiedliche Laufzeiten. Aus dem Reflektionsmuster kann dann ermittelt werden, von welchem Zweig des Datennetzes das reflektierte Testsignal stammt. Durch die Wahl der unterschiedlichen Abstände der Reflektoren gegenüber der sendenden Einheit kann eine Kodierung im Zeitbereich erfolgen. In seiner einfachsten Form wird dies auch als "Optical Time Domain Reflectometry" (OTDR) bezeichnet. Hierbei sind die Enden aller Zweige unterschiedlich weit von der zentralen Stelle entfernt. Da dies eine starke Einschränkung beim Entwurf des Netzes darstellt, kann man die jeweiligen Reflexe an den Endstellen noch zusätzlich kodieren, indem wie oben beschrieben mehrere Reflektoren am Zweigende zum Einsatz kommen und statt eines einzigen reflektierten Pulses eine Pulsfolge erzeugt. Eine solche eindimensionale Kodierung wurde bereits erfolgreich für die Überwachung von passiven optischen Netzen verwendet; für künftige passive optische Netze ist diese Art der Kodierung allerdings nicht geeignet, da mit einer gewissen Anzahl von Reflektoren durch die dadurch gegebene begrenzte Kodelänge nur eine begrenzte Anzahl von unterschiedlichen Kodes erzeugt werden kann.

Mit OTDR kann nicht nur grundsätzlich der Status der Verbindung (vorhanden oder nicht vorhanden) festgestellt werden, sondern auch Informationen über die Qualität der Verbindung hergeleitet werden, insbesondere über die Qualität von Steckern oder Spleißen. Ferner kann die Position eines möglichen Schnittes in der Glasfaserleitung erkannt werden. In der derzeitigen Form kann die OTDR allerdings nicht effizient genutzt werden für die Überwachung der passiven optischen Netze. Dies rührt daher, dass die Testsignale zeitgleich an alle Zweige des Netzes gesendet werden und von dort zurückreflektiert werden; die zurückgesendeten Signale überlappen sich an dem zentralen Punkt und sind daher nicht mehr eindeutig den einzelnen Ästen des Netzes zuzuordnen. Eine große Herausforderung stellt also die Art und Weise dar, wie die zurückreflektierten Signale einen gewissen Ast bzw. einem Datenempfänger zugeordnet werden können.

Es gab auch bereits Ansätze, unterschiedlichen ONUs unterschiedliche Wellenlängen zuzuordnen oder unterschiedliche Fasern mit unterschiedlichen Brillouin-Verschiebungen zu verwenden. Diese Verfahren können allerdings auch wiederum nur für Netze mit einer sehr geringen Anzahl von Ästen bzw. Datenempfängern verwendet werden und unterstützen auch nicht einmal Netze für eine durchschnittliche Anzahl von Nutzern. Für eine größere Anzahl von Ästen reichen die verfügbaren Wellenlängenbereiche der unterschiedlichen Fasern nicht aus. Es wurden auch Ansätze gezeigt, aktive Demarkationspunkte an den ONTs auf Seiten des Nutzers zu verwenden; dies erfordert aber aktive Systeme, die dann in der Lage sind, den Status des zugehörigen ONU's an den zentralen Punkt zu senden, wenn die Verbindung unterbrochen ist. Dieselben Schwierigkeiten fallen dann an, wenn die OTDR-Funktion in den Sendeeinheiten der ONU eingebettet ist. Die Schwierigkeit liegt dann stets darin, dass eine Statusmeldung an den zentralen Punkt übersendet werden muss, obwohl eine Datenverbindung dorthin nicht mehr vorhanden ist.

Die US 5,671,308 offenbart ein gattungsgemäßes optisches Datennetz.lm Bereich der Datenempfäger sind optische, wellenlängenabhängige Reflektoren vorgesehen, die sich von anderen im Netz befindlichen Reflektoren in der Reflexionscharakteristik unterscheiden.

Insofern ist es Aufgabe der vorliegenden Erfindung, eine Anordnung bzw. ein Verfahren bereitzustellen, mit dem auch sehr große optische Netze, also solche mit sehr vielen Empfängern, zuverlässig und wirtschaftlich zentral überwacht werden können.

Die der Erfindung zugrunde liegende Aufgabe wird gelöst durch ein Datennetz nach Anspruch 1 und ein Verfahren zur Überwachung eines Datennetzes nach Anspruch 6; bevorzugte Ausgestaltungen ergeben sich aus den Unteransprüchen.

Erfindungsgemäß ist nun vorgesehen, dass von Sendeeinheiten optische Testsignale über die optischen Leitungen zu einer Vielzahl von Datenempfängern gesendet werden. Reflektoreinheiten, die zumindest einem Datenempfänger zugeordnet sind, reflektieren die Testsignale mittels eines reflektierenden Kodierers, senden also selbst wieder reflektierte und zusätzlich kodierte Testsignale in Richtung der Sendeeinheiten aus. An einem zentralen Ort, z.B. in der Nähe der Sendeeinheiten oder der Datenverteilungsstelle, ist eine Empfangseinheit zum Empfangen der reflektierten Testsignale vorhanden. Die Empfangseinheit kann insbesondere Testsignale sämtlicher Reflektoreinheiten empfangen. Die Besonderheit liegt nun darin, dass die Reflektoreinheit auf der Kundenseite mehrere und jeweils unterschiedlich wellenabhängige Reflektoren aufweisen, die in einem definierten Abstand zur Sendeeinheit bzw. zur Empfangseinheit angeordnet sind. Die im optischen Datennetz vorgesehenen Reflektoreinheiten unterscheiden sich dabei von anderen im optischen Datennetz vorgesehenen Reflektoreinheiten durch eine individuelle Reflektionscharakteristik, wobei die individuelle Reflektionscharakteristik einer jeden Reflektoreinheit durch eine einmalige Kombination aus Wellenlängenabhängigkeit und der Differenzen der Abstände der zugehörigen Reflektoren festgelegt ist. Somit kann die Empfangseinheit die reflektierten Testsignalen, die von der Empfangseinheit empfangen werden, anhand dieser spezifischen Kombination der zeitlichen Abstände und der Wellenlänge der reflektierten Testsignale einer bestimmten Reflektoreinheit zuordnen.

Die Reflektoreinheit sendet also ein individuelles reflektiertes Testsignal in Richtung der Empfangseinheit. Dieses individuelle reflektierte Testsignal wird dabei durch die Reflektoreinheit erzeugt, und zwar insbesondere passiv aus den ursprünglichen, von der Sendeeinheit ausgesendeten Testsignalen. Der Vorteil liegt nun darin, dass durch die Kombination der Abstände und der Wellenlängen in Abhängigkeit der Reflektoren eine zweidimensionale Kodierung erzeugt wird, durch die eine wesentlich größere Anzahl von individuellen Codes möglich wird, als dies bislang der Fall war. Dabei müssen die Reflektoreinheiten baulicht nicht deutlich vergrößert werden gegenüber bekannten Reflektoreinheiten; lediglich müssen die Reflektoren ihre Reflektoreinheit lediglich durch wellenlängenselektive Reflektoren ersetzt werden, also solche, die aus einem breiten Wellenspektrum der ausgesendeten Testsignale nur einen bestimmten Wellenlängenbereich zurücksenden und Licht der übrigen Wellenlängenbereiche z.B. absorbieren oder durchlassen.

Damit ausschließlich passive Reflektoren verwendet werden können, sendet die Sendeeinheit Testsignale in unterschiedlichen Wellenlängenbereichen aus. Die Reflektoren selbst können Wellen reflektieren, die definiert in insbesondere einem oder auch mehreren der Wellenlängenbereiche der ausgesendeten Testsignale liegen. Durch die konkrete Auswahl der reflektierbaren Wellenlängenbereiche in Kombination mit dem konkreten Abstand bzw. der Abstandsdifferenz zu anderen Reflektoren innerhalb einer Reflektoreinheit wird dann die individuelle Reflexionscharakteristik festgelegt. Für das Aussenden des Testsignals kann ein Laser verwendet werden, der Licht in unterschiedlichen Wellenlängenbereichen aussenden kann.

Im Gegensatz zum aktiven Kodieren von zurückgesendeten Testsignalen kann die Kodierung rein passiv erfolgen; das heißt insbesondere, dass mit Ausnahme der Energie, die von den ursprünglichen Testsignalen stammt, keine weitere Energie für die Erzeugung des reflektierten Testsignalen aufgebracht werden muss. Insbesondere benötigt die Reflektoreinheit keine Zufuhr von externer Energie, die beispielsweise von einer Stromquelle bereitgestellt wird.

Gegenüber der bekannten Methode der Reflexion durch in unterschiedlichen Abständen angeordneten Reflektoren kann das reflektierte Testsignal nun sehr viel kürzer sein, wobei dennoch eine höhere Anzahl unterschiedlicher Codes ermöglicht wird. Das Aussenden des Testsignals und das Empfangen des Testsignals nimmt also deutlich weniger Zeit in Anspruch und blockiert damit auch weniger Übertragungskapazität in den Leitungen.

In einer bevorzugten Ausgestaltung kann das Testsignal eine Aneinanderreihung von Impulsen unterschiedlicher Wellenlängen aufweisen. Das Testsignal besteht folglich nicht nur aus einem konstanten, wenn auch recht kurzzeitigen Lichtimpuls, sondern weist bereits selbst eine gewisse Kodierung auf. Nun wird allerdings dieses aufgeteilte Testsignal auch wiederum an alle Reflektoreinheiten gesendet. An den Reflektoreinheiten erfolgt dann wiederum eine Reflexion der einzelnen Impulse entsprechend der Wellenlänge der einzelnen Impulse verknüpft mit den reflektierbaren Wellenlängenbereichen derjeweiligen Reflektoreinheiten. Sollte also beispielsweise ein gewisser Lichtimpuls mit einer bestimmten Wellenlänge ausgesendet werden, eine Reflektoreinheit weist aber keinen dazu entsprechenden Reflektor auf, so bleibt ein solcher Lichtimpuls von dieser Reflektoreinheit unbeantwortet, während er von einer anderen Reflektoreinheit durch ein reflektiertes Testsignal beantwortet wird.

Dabei kann bei einer ersten Ausgestaltung ein einzelner spezieller optischer Sender verwendet werden, der Licht in einem gewissen breiten Spektralbereich aussendet. Es kann dann eine Modulation dieses breiten Frequenzbandes in einem zweiten Schritt vorgenommen werden.

Alternativ kann ein elektrisches Steuersignal für einen Modulator einen Frequenzkamm aufweisen, beispielsweise aufgeprägt durch digitale Signalerzeugung. Die Verwendung eines Frequenzkamms weist den Vorteil auf, dass das so erzeugte Spektrum sich in der Wellenlänge mit der Temperatur verändern kann, wobei sich das Spektrum immer vollständig verschiebt. Dadurch kann der Abstand zwischen den einzelnen Frequenzkomponenten stets identisch bleiben. Somit stimmen also entweder alle spektralen Komponenten perfekt mit den entsprechenden Wellenlängen der Reflektoren überein. Die Kodierung bzw. Erkennung der reflektierten Testsignale wird somit deutlich vereinfacht bzw. robuster.

Die Sendeeinheit und die Empfangseinheit sind bevorzugt zwischen der Datenverteilungsstelle und dem Splitter angeordnet. Damit kann gewährleistet werden, dass Sendeeinheit und die Empfangseinheit an einem zentralen Ort installiert sind. Der Splitter kann dann dazu genutzt werden, die Testsignalen auf alle daran angeschlossenen Äste des Netzwerks zu verteilen bzw. von dort aufzusammeln.

Die Erfindung wird anhand der Figuren nachfolgend näher erläutert. Hierin zeigt
- Figur 1: ein erfindungsgemäßes Datennetz in schematischer Darstellung;
- Figur 2: a) die Anordnung von Reflektoren in dem Datennetz nach Figur 1;
b) die durch die Reflektoren erzielte Kodierung von reflektierten Testsignalen;
- Figur 3: das Wellenlängenspektrum eines Testsignals
a) in einer erste Ausgestaltung,
b) in einer zweiten Ausgestaltung;
- Figur 4: den schematischen Aufbau einer Empfangseinheit zum Empfangen von reflektierten Testsignalen
a) in einer ersten Ausgestaltung,
b) in einer zweiten Ausgestaltung
c) in einer dritten Ausgestaltung;
- Figur 5: den schematischen Aufbau einer Sendeeinheit zum Aussenden von Testsignalen
a) in einer erste Ausgestaltung,
b) in einer zweiten Ausgestaltung;
- Figur 6: Details zur Sendeeinheit nach Figur 5b
a) in einer ersten Variante,
b) in einer zweiten Variante,
c) in einer dritten Variante.

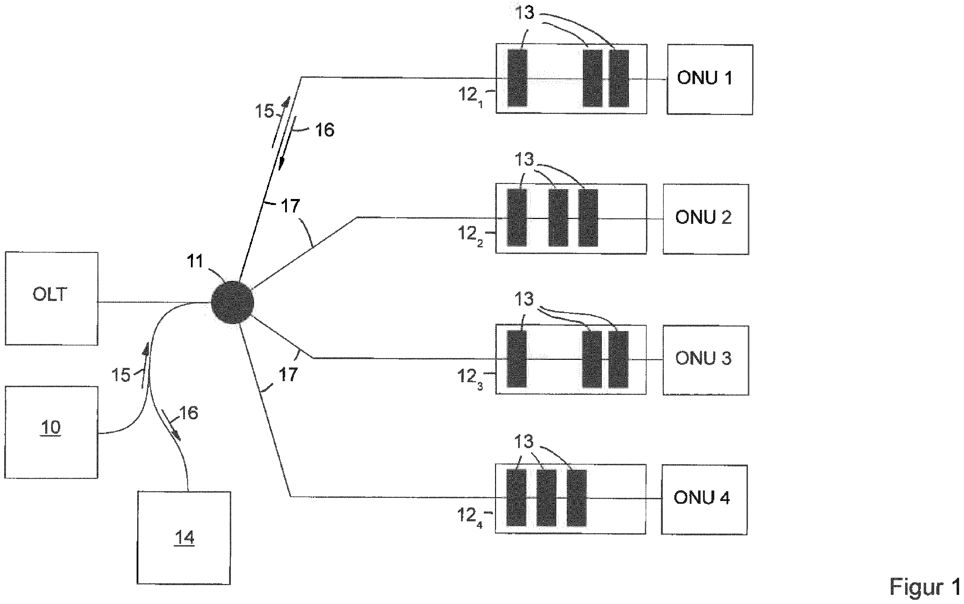

In Figur 1 ist ein erfindungsgemäßes Datennetz gezeigt. Dies umfasst eine zentrale Datenverteilungsstelle OLT, welches Daten an eine Vielzahl von Datenempfänger ONU aussenden kann und von diesen auch Daten empfangen kann. Über einen Leistungssplitter 11 werden ausgesendete Lichtimpulse mit den Daten gleichzeitig auf alle Datenempfänger ONU aufgeteilt. Ein Signal 15, welches von der zentralen Datenverteilungsstelle OLT ausgesendet wird, kann also dem Grunde nach von allen ONUs gleichzeitig empfangen werden. Dies entspricht weitgehend dem üblichen Aufbau eines passiven optischen Netzes PON.

Um nun eine Möglichkeit zu schaffen, die Leitung von zumindest dem Leistungssplitter 11 hin zu den einzelnen Datenempfängern ONU auf deren Funktionsfähigkeit zu überprüfen, ist eine Sendeeinheit 10 zum Aussenden von optischen Testsignalen 15 über die optischen Leitungen 17 vorgesehen. Die Sendeeinheit 10 streut das Testsignal 15 vor dem Leistungssplitter 11 in das Datennetz ein. Das optische Testsignal 15 wird somit auch in alle Zweige des Netzes eingespielt und damit in Richtung der Datenempfänger ONU gesendet.

Jedem der Datenempfänger ONU ist nun eine Reflektoreinheit 12 zugeordnet, insbesondere vor den einzelnen Datenempfängern in den optischen Leitungen 17 angeordnet sind. Die Reflektoreinheiten 12 weisen eine Mehrzahl von Reflektoren 13 auf, wobei im vorliegenden Beispiel nur beispielhaft drei Reflektoren vorgesehen sind. Die Anzahl ist aber beliebig. Es ist bereits aus Figur 1 zu erkennen, dass die räumlichen Anordnungen der einzelnen Reflektoren 13 in den jeweiligen Reflektoreinheiten 12 unterschiedlich zueinander sind. Aufgrund dieses Unterschieds werden somit die ausgesendeten Testsignale von den Reflektoreinheiten 13 auch in unterschiedlicher Weise wieder zurückreflektiert und treffen in voneinander abweichender Weise als reflektierte Testsignale 16 auf eine Empfangseinheit 14, die die reflektierten Testsignale 16 empfängt und auswertet.

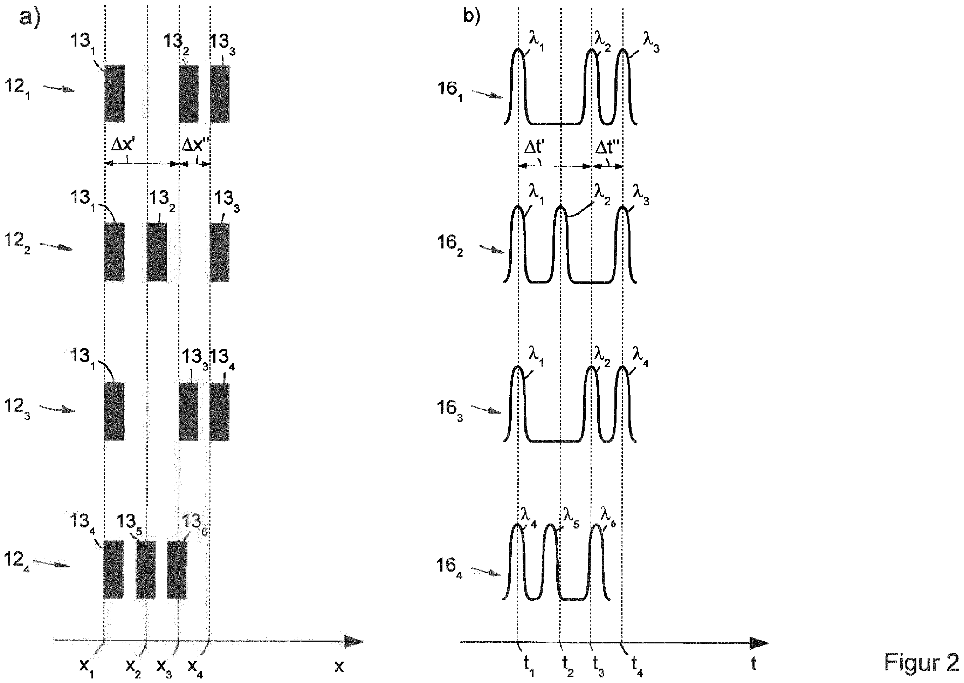

In Figur 2a ist nun beispielhaft die relative Anordnung der einzelnen Reflektoren 13 innerhalb der jeweiligen Reflektoreinheiten 12₁ bis 12₄ näher dargestellt. So weist beispielsweise die Reflektoreinheit 12₁ drei Reflektoren 13₁, 13₂ und 13₃ auf. Der Reflektor 13₁ ist an einem Abstand x₁ von der Sendeeinheit 10 angeordnet, der Reflektor 13₂ in einem Abstand x₃ und der Reflektor 13₃ in einem Abstand x₄. Der absolute Abstand der Reflektoren gegenüber der Sendeeinheit 10 ist allerdings nur von geringerer Bedeutung. Von wesentlicher Bedeutung sind hingegen die Differenzen der Abstände der Reflektoren 13. So ist beispielsweise der Reflektor 13.₂ um eine Differenz Δx' weiter entfernt von der Sendeeinheit 10 als der Reflektor 13₁. Der Reflektor 13₃ ist um eine Differenz Δx" weiter entfernt angeordnet als der Reflektor 13₂. Es ist ersichtlich, dass ein Testsignal 15, welches in den unterschiedlichen Abständen x₁ bis x₄ auf die Reflektoren 13 trifft, zu unterschiedlichen Zeitpunkten reflektiert wird.

Ferner weisen die einzelnen Reflektoren 13 voneinander abweichende Wellenlängenabhängigkeiten auf. So kann der Reflektor 13₁ nur Licht im Wellenlängenbereich von λ₁ reflektieren; der Reflektor 13₂ reflektiert lediglich Licht im Wellenlängen im Bereich von λ₂, usw. Das reflektierte Testsignal 16 ist demnach in Figur 2b dargestellt. Es sind dort auch die zeitlichen Abstände Δt der einzelnen Frequenzkomponenten λ im reflektierten Lichtsignal 16 zu erkennen, die sich aus den Abstandsdifferenzen der wellenlängenselektiven Reflektoren 13 zueinander ergeben.

Die Reflektoreinheit 12₂ weist eine abweichende Anordnung der Reflektoren 13 auf, z.B. verglichen mit der Reflektoreinheit 12₁. So sind in Abweichung zur Reflektoreinheit 12₁ der zweite Reflektor 13₂ und der dritte Reflektor 13₃ jeweils auf den Abstandspositionen x₂ und x₄ angeordnet. Die Wellenlängenabhängigkeit der verwendeten Reflektoren ist aber identisch. Es ergibt sich ein reflektiertes Signal 16₂, wie in Figur 2b zu erkennen ist.

Der einzige Unterschied zwischen der ersten Reflektoreinheit 12₂ und der zweiten Reflektoreinheit 12₁ ist die Position des zweiten Reflektors 13₂. Dementsprechend ändert sich auch die Position des Teilsignals mit der Wellenlänge λ₂, welche, relativ zu den anderen Teilsignalen somit schon früher auf die Empfangseinheit 14 treffen wird als dies beim reflektierten Testsignal 16₁ der ersten Reflektoreinheit 12₁ der Fall ist. Bei der dritten Reflektoreinheit 12₃ entspricht die geometrische Anordnung der einzelnen Reflektoreinheiten der der ersten Reflektoreinheit 12₁. Anstelle des dritten Reflektors 13₃ wird allerdings ein vierter Reflektor 13₄ verwendet, der eine Wellenlängenabhängigkeit im Wellenlängenbereich von λ₄ aufweist. Das resultierende reflektierte Testsignal 16₃ weist dabei also Abweichungen zum ersten reflektierten Testsignal 16₁ im Wellenlängenbereich zum Zeitpunkt t₄ auf.

Während sich die zweite und dritte Reflektoreinheiten 12₂ und 12₃ jeweils nur in einer Dimension von der ersten Reflektoreinheit 13₁ unterscheiden, nämlich entweder in der geometrischen Anordnung oder in der Wellenlängenabhängigkeit zumindest eines Reflektors, unterscheiden sie sich zweite und dritte Reflektoreinheiten 12₂ und 12₃ voneinander in zwei Dimensionen, nämlich sowohl in der geometrischen Anordnung als auch in der Wellenlängenabhängigkeit zumindest eines Reflektors.

Die vierte Reflektoreinheit 12₄ unterscheidet sich in zwei Dimensionen von allen anderen gezeigten Reflektoreinheiten. Bei der vierten Reflektoreinheit 12₄ sind nämlich sowohl die Wellenlängenabhängigkeiten von zumindest einem der drei Reflektoren, nämlich der beiden Reflektoren 13₅ und 13₆ gegenüber den anderen Reflektoreinheiten verändert. Ferner wird auch die örtliche Anordnung der Reflektoreinheiten 13₅ und 13₆ gegenüber verändert. Es ergibt sich ein - verglichen zu den anderen reflektierten Testsignalen 16₁ bis 16₃ - vollständig anderes viertes Testsignal 16₄, welches sich sowohl in der zeitlichen Abfolge von reflektierten Impulsen wie auch in deren Wellenlängenbereich von den anderen Testsignalen unterscheidet. Es ist ersichtlich, dass durch diese Art der Modifikation ein großes Spektrum an unterschiedlichsten Codierungen erzeugt werden kann.

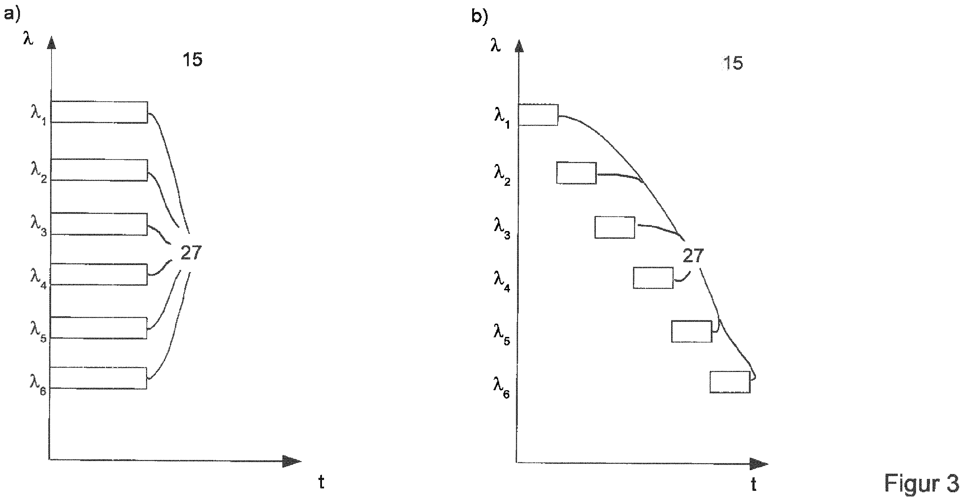

In Figur 3 ist schematisch der Aufbau eines ausgesendeten Testsignals 15 gezeigt. Nach Figur 3a wird ein Testsignal 15 verwendet, welches zugleich separate Lichtimpulse in mehreren, voneinander durch Frequenzlücken beabstandeten Frequenzbereichen λ₁ bis λ₆ umfasst und so einen Frequenzkamm mit mehreren Subträgern bildet. In Figur 3b ist ein alternatives ausgesendetes Testsignal 15 gezeigt, welches ebenfalls die Lichtimpulse mit den Subträgern 27 in unterschiedlichen Frequenzbereichen λ₁ bis λ₆ umfasst, diese aber zu unterschiedlichen Zeitpunkten t gesendet werden. Es ist ersichtlich, dass durch Verwendung eines Testsignals 15 mit einem Frequenzkamm das reflektierte Testsignal 16 nochmals verfeinert werden kann, insbesondere wenn (gemäß Figur 3b) die Impulse unterschiedlicher Frequenz zu unterschiedlichen Zeitpunkten gesendet werden. Damit kann die Anzahl möglicher Kodierungen nochmals um ein Vielfaches erhöht werden bei, ohne dass der Aufbau der Reflektoreinheiten anzupassen ist. Diese Maßnahme eignet sehr gut sich für eine Nachrüstung bestehender Strukturen.

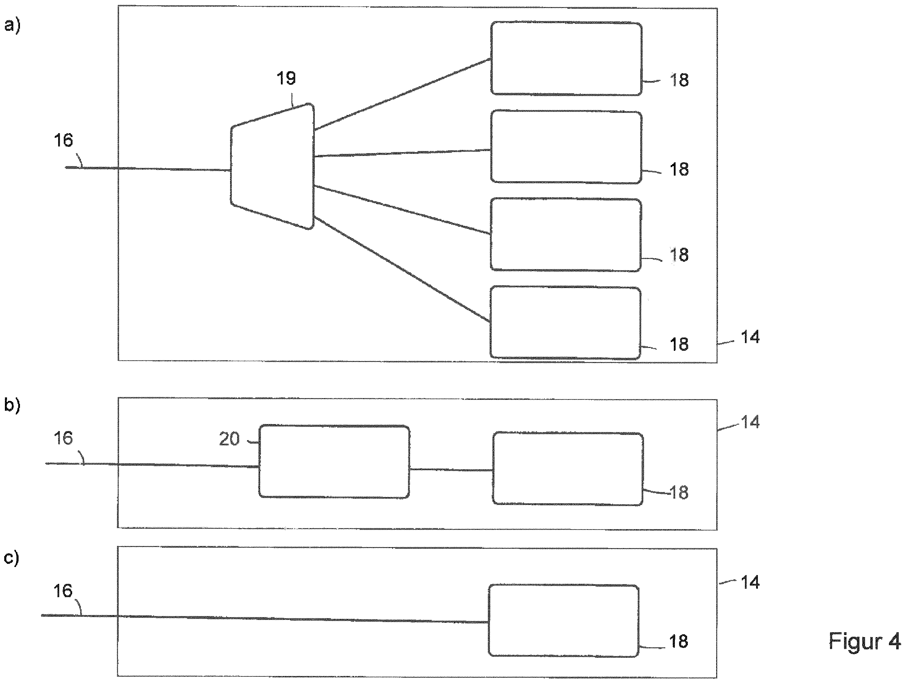

Anhand der Figur 4 wird schematisch der Aufbau der Empfangseinheit 14 gezeigt. Das reflektierte Testsignal 16 trifft stets auf die Empfangseinheit 14. In Figur 4a umfasst die Empfangseinheit 14 einen Wellenlängensplitter 19. Eintreffende Lichtsignale 16 werden damit in ihr Frequenzspektrum aufgeteilt. Die unterschiedlichen Wellenlängenbereiche werden dann den jeweiligen Empfängern 18 zugewiesen, die erkennen können, ob jeweils zu einem bestimmten Zeitpunkt Licht in einem bestimmten Wellenspektrum im reflektierten Testsignal 16 vorhanden ist.

In Figur 4b ist eine alternative Ausgestaltung gezeigt. Dies ermöglicht eine sequenzielle Filterungen durch einen sequenziellen Filter 20. Der sequenzielle Filter 20 lässt zwar auch einzelne Wellenspektren aus dem reflektierten Testsignal 16 durch, allerdings können diese Spektralbereiche zeitlich nacheinander geändert werden, wodurch die einzelnen Wellenlängenspektren nach einander auf die Fotodiode 18 treffen und so getrennt verarbeitet werden können. Durch eine geeignete Signalverarbeitung kann dann das reflektierte Testsignal 16 wieder erkannt und ausgewertet werden.

In Figur 4c ist eine weitere Ausgestaltung gezeigt. Die verwendete optische Fotodiode 18 kann sämtliche der verwendeten Wellenlängenbereiche aufnehmen und erkennen bzw. verarbeiten. Diese Ausgestaltung bedarf allerdings einer zusätzlichen Signalverarbeitung, da nun die verschiedenen Spektral bereiche gleichzeitig und ohne Unterscheidung empfangen werden.

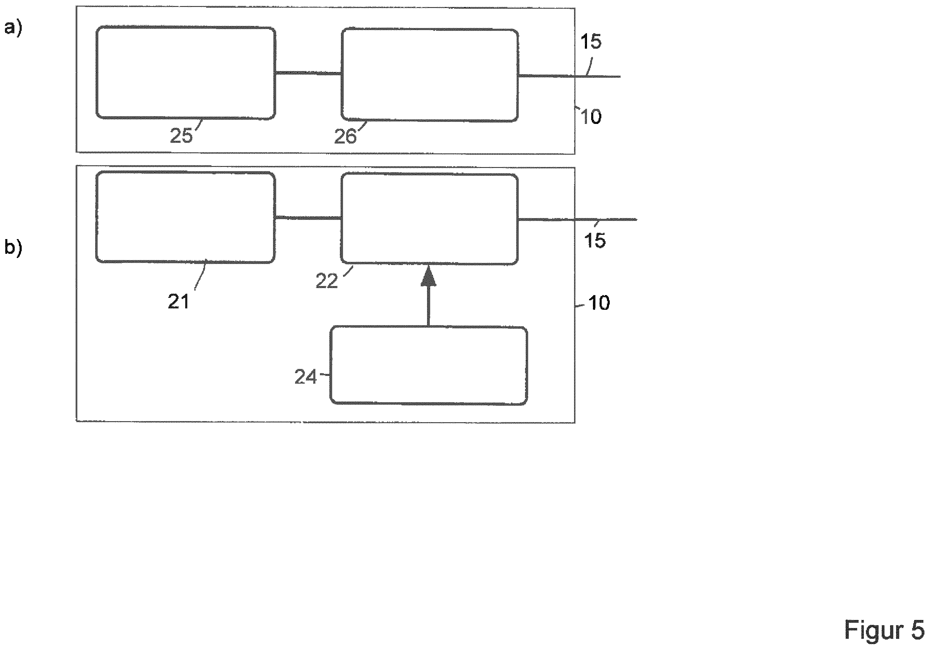

Figur 5 zeigt schematisch den Aufbau der Sendeeinheit 10, die das Signal 15 erzeugt. In Figur 5a ist ein Mehrfrequenzsender 29 als optische Quelle vorgesehen. Ein Frequenzmodulator 26 kann das erzeugte Mehrfrequenzsignal 26 weiter modulieren. In Figur 5b wird ein Dauerstrich-Laser 21 mit schmalem Spektrum verwendet. Ein Signalgenerator 24 erzeugt ein Steuersignal für einen Phasenmodulator 22. Der Phasenmodulator 22 kann das vom Dauerstrich-Laser ausgesendete Signal in seiner Phase modulieren. Dadurch entstehen zusätzliche Frequenzkomponenten um die ursprünglich vom Dauerstrichlaser abgegebene Frequenzkomponente herum, sodass ein Frequenzkamm mit mehreren Frequenzkomponenten entsteht.

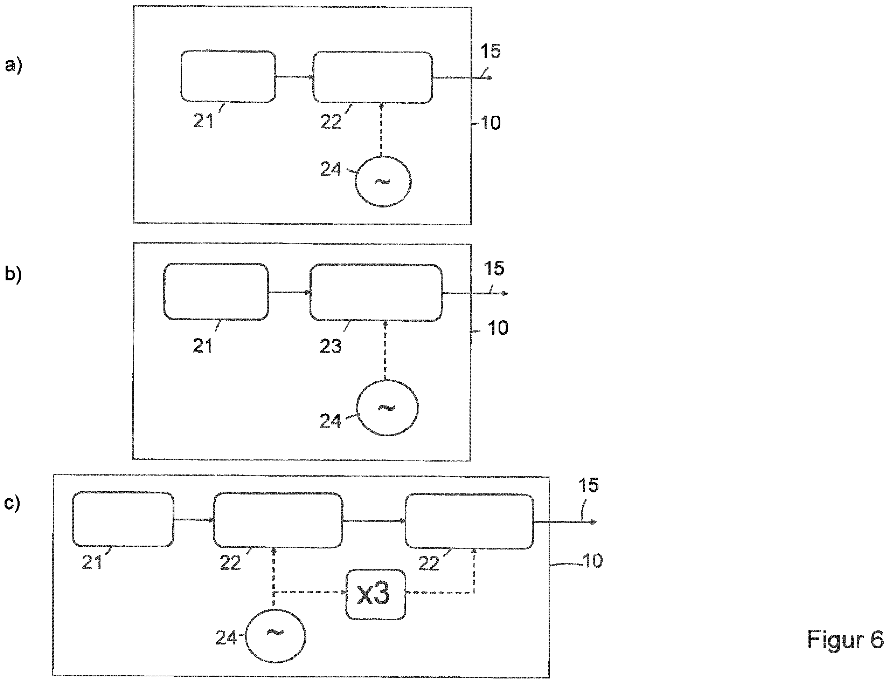

In Figur 6 sind dabei unterschiedliche Varianten der Anordnung nach Figur 5b gezeigt. In Figur 6a wird ein Reihenphasenmodulator 22 von dem Signalgenerator 24 angesteuert. In Figur 6b ist ein Dual-Drive-Modulator 23 vorgesehen, der durch den Signalgenerator 24 angesteuert wird. Durch eine solche Anordnung kann ein Frequenzkamm mit fünf Subträgern hergestellt werden. In Figur 6c sind zwei Phasenmodulatoren 22 hintereinander geschaltet. Diese sind kaskadiert angeordnet. Hierdurch potenziert sich die Möglichkeit jeweils um den Faktor 3, so dass ein Frequenzkamm mit neun Ästen erzeugt werden kann.

### Bezugszeichenliste

- 10: Sendeeinheit
- 11: Splitter
- 12: Reflektoreinheit
- 13: Reflektor
- 14: Empfangseinheit
- 15: optisches Testsignal
- 16: reflektiertes optisches Testsignal
- 17: Glasfaserleitung
- 18: Fotodiode
- 19: wellenlängenabhängiger Signalsplitter
- 20: sequentielles Filter
- 21: Dauerstrich-Laser
- 22: Phasenmodulator
- 23: Dual-Drive-Modulator
- 24: Signalgenerator
- 25: Mehrfrequenz-Sender
- 26: Amplitudenmodulator
- 27: Subträger

- OLT: Datenverteilungsstelle
- ONU: Datenempfänger

## Patentansprüche

1. Optisches, insbesondere sternförmiges Datennetz, umfassend eine zentrale Datenverteilungsstelle (OLT),
welches Datennutzsignale an eine Vielzahl von Datenempfänger (ONU) senden kann,
wobei die Datenempfänger (ONU) über optische Leitungen (17) mit der Datenverteilungsstelle (OLT) verbunden sind,
eine Sendeeinheit (10) zum Aussenden von optischen Testsignalen (15) über die optischen Leitungen (17) zu einer Vielzahl der Datenempfänger (ONU),
Reflektoreinheiten (12), die jeweils zumindest einem Datenempfänger (ONU) zugeordnet sind, zum Reflektieren der Testsignale,
eine Empfangseinheit (14) zum Empfangen der reflektierten Testsignale (16), wobei die Reflektoreinheiten (12) jeweils mehrere unterschiedlich wellenlängenabhängige Reflektoren (13) aufweisen, die in einem definierten Abstand (x) zur Sendeeinheit (10) und/oder zur Empfangseinheit (14) angeordnet sind, wobei die im optischen Datennetz vorgesehenen Reflektoreinheiten (12) sich von anderen im optischen Datennetz vorgesehenen Reflektoreinheiten (12) durch eine individuelle Reflexionscharakteristik unterscheiden,
wobei die individuelle Reflexionscharakteristik einer jeden Reflektoreinheit (12) durch die einmalige Kombination aus Wellenlängenabhängigkeit und der Differenzen (Δx) der Abstände (x) der zugehörigen Reflektoren (13) zueinander festgelegt ist,
**dadurch gekennzeichnet,**
**dass** sich jede Reflektoreinheit (12) von zumindest einer anderen Reflektoreinheit (12) durch die Kombination der Wellenlängenabhängigkeit der Reflektoren und der Differenzen (Δx) der Abstände (x) der zugehörigen Reflektoren (13) unterscheidet.

2. Datennetz nach dem vorherigen Anspruch,
**dadurch gekennzeichnet,**
**dass** die Reflektoreinheiten (12) ausschließlich passive Reflektoren (13) aufweisen.

3. Datennetz nach einem der vorherigen Ansprüche,
**dadurch gekennzeichnet,**
**dass** die Sendeeinheit (10) und die Empfangseinheit (14) zwischen der Datenverteilungsstelle (OLT) und einem Splitter (11) angeordnet ist.

4. Datennetz nach einem der vorherigen Ansprüche,
**dadurch gekennzeichnet,**
**dass** die Sendeeinheit (10) einen Modulator (22, 23, 26) umfasst, der einen Frequenzkamm mit Subträgern (27) erzeugt.

5. Verfahren zum Überwachen eines Datennetzes, wobei das Datennetz umfasst:
eine zentrale Datenverteilungsstelle (OLT),
welches Datennutzsignale an eine Vielzahl von Datenempfänger (ONU) senden kann,
wobei die Datenempfänger (ONU) über optische Leitungen (17) mit der Datenverteilungsstelle (OLT) verbunden sind,
das Verfahren umfasst die folgenden Verfahrensschritte:
von einer Sendeeinheit (10) werden optische Testsignale (15) über die optischen Leitungen zu einer Vielzahl der Datenempfänger (ONU) ausgesendet,
von Reflektoreinheiten (12), die jeweils zumindest einem Datenempfänger (ONU) zugeordnet sind, werden die Testsignale reflektiert,
die reflektierten Testsignale (16) werden von einer Empfangseinheit (14) empfangen,
wobei die Reflektoreinheiten (12) zeitlich nacheinander mehrere reflektierte Testsignale (16) unterschiedlicher Wellenlänge (λ) abgeben,
**dadurch gekennzeichnet,**
**dass** die Empfangseinheit die reflektierten Testsignale (16) anhand der spezifischen Kombination der zeitlichen Abstände (At) der reflektierten Testsignale (16) zueinander und der Wellenlängen (λ) der reflektierten Testsignale (16) einer bestimmten Reflektoreinheit (12) zuordnet.

6. Verfahren nach dem vorherigen Anspruch,
**dadurch gekennzeichnet,**
**dass** das Testsignal (15) einen Frequenzkamm umfasst und dabei insbesondere Subträger (27) unterschiedlicher Wellelänge (9") umfasst.

7. Verfahren nach dem vorherigen Anspruch,
**dadurch gekennzeichnet,**
**dass** die einzelnen Subträger (16) gleichzeitig ausgesendet werden.

8. Verfahren nach Anspruch 6,
**dadurch gekennzeichnet,**
**dass** einzelne Subträger (27) zu unterschiedlichen Zeiten (t) ausgesendet werden, insbesondere alle Subträger (27) separat nacheinander ausgesendet werden.

## Claims

1. An optical, in particular star-shaped data network comprising:
a central data distribution point (OLT),
which can send data useful signals to a plurality of data receivers (ONU),
wherein the data receivers (ONU) are connected with the data distribution point (OLT) via optical lines (17),
a sender unit (10) for sending optical test signals (15) to a plurality of data receivers (ONU) via the optical lines (17),
reflector units (12), each of which is assigned to at least one data receiver (ONU) for reflecting the test signals,
a receiver unit (14) for receiving the reflected test signals (16),
wherein the reflector units (12) each comprise a number of reflectors (13) dependent on varying wavelengths, which are arranged at a defined distance (x) to the sender unit (10) and/or to the receiver unit (14),
wherein the reflector units (12) provided in the optical data network are different from other reflector units (12) provided in the optical data network due to an individual reflection characteristic,
wherein the individual reflection characteristic of each reflector unit (12) is determined by the unique combination of wavelength dependency and the differences (wax) in the distances (x) of the associated reflectors (13) relative to each other,
**characterised in that**
each reflector unit (12) is different from at least one other reflector unit (12) due to the combination of the wavelength dependency of reflectors and the differences (lax) in the distances (x) of the associated reflectors (13).

2. The data network according to the previous claim,
**characterised in that**
the reflector units (12) comprise exclusively passive reflectors (13).

3. The data network according to one of the previous claims,
**characterised in that**
the sender unit (10) and the receiver unit (14) are arranged between the data distribution point (OLT) and a splitter (11).

4. The data network according to one of the previous claims,
**characterised in that**
the sender unit (10) comprises a modulator (22, 23, 26), which generates a frequency comb with sub-carriers (27).

5. A method for monitoring a data network, wherein the data network comprises:
a central data distribution point (OLT),
which can send data useful signals to a plurality of data receivers (ONU),
wherein the data receivers (ONU) are connected to the data distribution point (OLT) via optical lines (17),
the method comprising the following method steps:
optical test signals (15) are emitted from a sender unit (10) to a plurality of data receivers (ONU),
test signals are reflected from reflector units (12), each of which is assigned to at least one data receiver (ONU),
the reflected test signals (16) are received by a receiver unit (14), wherein the reflector units (12) emit a number of reflected test signals (16) of different wavelengths (A) consecutively over time,
**characterised in that**
the receiver unit assigns the reflected test signals (16) to a certain reflector unit (12) by way of the specific combination of the time distances (6t) of the reflected test signals (16) relative to each other and the wavelengths (λ) of the reflected test signals z6) .

6. The method according to the preceding claim,
**characterised in that**
the test signal (15) comprises a frequency comb with in particular, sub-carriers (27) of varying wavelength (X).

7. The method according to the preceding claim,
**characterised in that**
the individual sub-carriers (27) are emitted simultaneously.

8. The method according to claim 6,
**characterised in that**
individual sub-carriers (27) are emitted at different times (t), in particular **in that** the sub-carriers (27) are emitted separately one after the other.

## Revendications

1. Réseau de données optique, en particulier étoilé, comprenant un point de distribution de données central (OLT),
lequel peut envoyer des signaux utiles de données à une pluralité de récepteurs de données (ONU),
dans lequel les récepteurs de données (ONU) sont reliés au point de distribution de données central (OLT) par le biais de lignes optiques (17),
une unité d'émission (10) pour émettre des signaux de test optiques (15) à une pluralité de récepteurs de données (ONU) par le biais des lignes optiques (17),
des unités de réflecteur (12) qui sont respectivement attribuées à au moins un récepteur de données (ONU) pour réfléchir les signaux de test,
une unité de réception (14) pour recevoir les signaux de test réfléchis (16),
dans lequel les unités de réflecteur (12) présentent respectivement plusieurs réflecteurs (13) différents dépendants des longueurs d'onde qui sont disposés dans un écart défini (x) par rapport à l'unité d'émission (10) et/ou l'unité de réception (14),
dans lequel les unités de réflecteur (12) prévues dans le réseau de données optique se différencient des autres unités de réflecteur (12) prévues dans le réseau de données optique par une caractéristique de réflexion individuelle,
dans lequel la caractéristique de réflexion individuelle d'une unité de réflecteur (12) respective est déterminée par la combinaison unique de la dépendance aux longueurs d'onde et des différences (aux) des écarts (x) des réflecteurs (13) correspondants entre eux,
**caractérisé en ce que**
chaque unité de réflecteur (12) se différencie d'au moins une autre unité de réflecteur (12) par la combinaison de la dépendance aux longueurs d'onde des réflecteurs et des différences (Δx) des écarts (x) des réflecteurs (13) correspondants.

2. Réseau de données selon la revendication précédente,
**caractérisé en ce que**
les unités de réflecteur (12) présentent exclusivement des réflecteurs passifs (13).

3. Réseau de données selon l'une des revendications précédentes,
**caractérisé en ce que**
l'unité d'émission (10) et l'unité de réception (14) sont disposées entre le point de distribution de données central (OLT) et un splitter (1.1).

4. Réseau de données selon l'une des revendications précédentes,
**caractérisé en ce que**
l'unité d'émission (10) comprend un modulateur (22, 23, 26) qui produit un peigne de fréquences avec des sous-porteurs (27).

5. Procédé pour la surveillance d'un réseau de données, t dans lequel le procédé comprend :
un point de distribution de données central (OLT),
lequel peut envoyer des signaux utiles de données à une pluralité de récepteurs de données (ONU),
dans lequel les récepteurs de données (ONU) sont reliés au point de distribution de données central (OLT) par le biais de lignes optiques (17),
le procédé comprend les étapes de procédé suivante
des signaux de test optiques (15) sont émis d'une unité d'émission (10) vers une pluralité de récepteurs de données (ONU) par le biais des lignes optiques,
les signaux de test sont réfléchis par des unités de réflecteur (12) qui sont respectivement attribuées à au moins un récepteur de données (ONU),
les signaux de test réfléchis (16) sont reçus par une unité de réception (14),
dans lequel les unités de réflecteur (12) envoient l'un après l'autre temporellement plusieurs signaux de test (16) réfléchis de longueur d'onde (A) différente,
**caractérisé en ce que**
l'unité de réception attribue les signaux de test (16) réfléchis à une unité de réflecteur (12) définie à l'aide de la combinaison spécifique des écarts temporels (At) des signaux de test (16) réfléchis entre eux et des longueurs d'onde (λ) des signaux de test (16).

6. Procédé selon la revendication précédente,
**caractérisé en ce que**
le signal de test (15) comprend un peigne de fréquences et en particulier dessus des sous-porteurs (27) de longueur d'onde (À) différente.

7. Procédé selon la revendication précédente,
**caractérisé en ce que**
les sous-porteurs (27) individuels sont émis en même temps.

8. Procédé selon la revendication 6,
**caractérisé en ce que**
les sous-porteurs (27) individuels sont émis à des temps (t) différents, en particulier tous les sous-porteurs (27) sont émis séparément l'un après l'autre.
